Europäisches Patentamt

European Patent Office

Office européen des brevets

(19)

(11) Numéro de publication : **0 502 760 A1**

# (12) DEMANDE DE BREVET EUROPEEN

(21) Numéro de dépôt : **92400486.4**

(22) Date de dépôt : **25.02.92**

(51) Int. Cl.⁵ : **B29C 49/74,** B26D 7/01, B26D 7/18

(30) Priorité : **26.02.91 FR 9102281**

(43) Date de publication de la demande :
**09.09.92 Bulletin 92/37**

(84) Etats contractants désignés :
**AT BE CH DE DK ES GB GR IT LI LU MC NL PT SE**

(71) Demandeur : **STORK DARDAINE INDUSTRIES S.A.**
**Allée de la Garenne Z.I. Nord**
**F-28106 Dreux (FR)**

(72) Inventeur : **Le Naour, Laurent**
**5, Rue de la Tuilerie**
**F-28500 Vernouillet (FR)**

(74) Mandataire : **Durand, Yves Armand Louis et al**
**CABINET WEINSTEIN 20, Avenue de Friedland**
**F-75008 Paris (FR)**

(54) **Procédé et dispositif de décolletage de la partie supérieure d'un récipient fermé en matiere plastique ou autre matière.**

(57) La présente invention concerne un procédé et un dispositif de décolletage de la partie supérieure d'un récipient fermé en matière plastique ou autre matière.

Le dispositif de cette invention comprend essentiellement, au-dessus d'un support (S) de bouteille (B) verticalement mobile, trois pinces étagées (P₁, P₂, P₃) susceptibles d'épouser étroitement le col (1) de la bouteille, et une lame (L) montée rotative entre deux pinces (P₂, P₃), les trois pinces et la lame étant respectivement solidaires d'axes de rotation concentriques actionnables chacun par l'intermédiaire d'une biellette (11, 21, 31, 41).

Ce procédé et ce dispositif permettent le décolletage du col d'un récipient en matière plastique destiné à contenir par la suite une denrée alimentaire liquide par exemple.

Fig. 2

EP 0 502 760 A1

La présente invention a essentiellement pour objet un procédé de décolletage ou découpe de la partie supérieure d'un récipient fermé en matière plastique ou autre matière.

Elle vise également un dispositif pour la mise en oeuvre de ce procédé.

On a déjà proposé divers systèmes pour découper ou décolleter les goulots de bouteilles fermées en matière plastique provenant d'une extrudeuse ou d'un magasin de stockage.

Ces systèmes comprenaient, d'une manière générale, des moyens de pinçage du goulot ou col de la bouteille afin de permettre par la suite le décolletage à l'aide d'une ou plusieurs lames par exemple constituées par une ou plusieurs molettes.

Cependant, de tels systèmes étaient d'une conception mécanique relativement compliquée. Leur fiabilité de fonctionnement était donc aléatoire, ce qui signifie que, dans le cas du décolletage d'une succession ou d'une ligne de bouteilles, il se produisait souvent des incidents exigeant l'arrêt du système et l'intervention d'un préposé. Comme on le comprend, ceci représente une perte de temps et est évidemment coûteux.

Aussi, la présente invention a pour but de remédier à ces inconvénients en proposant un système de décolletage des goulots ou cols de bouteilles fermées, qui est d'une conception mécanique remarquablement simple et présente une excellente fiabilité de fonctionnement, sans aucun risque d'incidents lors du décolletage d'une pluralité de bouteilles.

A cet effet, l'invention a pour objet un procédé de décolletage de la partie supérieure d'un récipient fermé constituant par exemple un goulot ou col de bouteille et du type consistant à maintenir la bouteille afin de permettre la découpe du col à l'aide d'une lame ou analogue, caractérisé en ce que la bouteille reposant initialement sur un support verticalement mobile,

 – on ferme une première pince située au niveau de la partie supérieure de la bouteille en dessous du col,

 – on soulève le support de la bouteille pour qu'elle vienne en butée par sa partie supérieure sur ladite première pince constituant ainsi une butée de référence,

 – on ferme une deuxième pince située au-dessus de la première pince, contre le col de la bouteille,

 – on ferme simultanément ou non à la fermeture de la deuxième pince, une troisième pince située au-dessus de cette deuxième pince, contre le col de la bouteille,

 – on actionne la lame pour qu'elle passe entre la deuxième et la troisième pinces afin de sectionner le col de la bouteille, et

 – on ouvre les trois pinces pour séparer la bouteille de l'extrémité libre et fermée du col découpé par la lame.

On précisera ici qu'avant d'ouvrir les trois pinces précitées, on abaisse le support de la bouteille, ce après quoi on ouvre simultanément ou non la première et la deuxième pinces pour permettre l'évacuation de la bouteille, puis, une fois la bouteille évacuée, on ouvre la troisième pince pour permettre l'évacuation de l'extrémité libre fermée et découpée du col de la bouteille.

Cette invention vise encore un dispositif pour la mise en oeuvre du procédé ci-dessus et du type comprenant des moyens de maintien par pinçage du goulot ou col de la bouteille ainsi qu'un moyen de découpe de ce col, ce dispositif étant essentiellement caractérisé en ce qu'il comprend, au-dessus d'un support de bouteille verticalement mobile, deux pinces étagées susceptibles d'épouser étroitement le col de la bouteille et une lame montée rotative entre ces deux pinces, les deux pinces et la lame étant respectivement solidaires d'axes de rotation concentriques actionnables chacun par une biellette ou analogue.

Suivant une autre caractéristique de ce dispositif, on prévoit, en dessous des deux pinces précitées, une autre pince qui forme butée de référence pour la bouteille soulevée par le support précité, et qui est solidaire d'un axe de rotation lui aussi actionnable par une biellette ou analogue et concentrique aux axes de rotation concentriques précités.

Suivant un mode de réalisation préféré, chaque pince se compose de deux bras coopérant par une extrémité avec la bouteille, chaque bras étant solidaire d'un axe de rotation concentrique aux axes solidaires des autres paires de bras constituant les autres pinces.

Suivant encore une autre caractéristique de ce dispositif, les deux extrémités de chaque bras des pinces étagées sont conformées pour coopérer avec les extrémités de bras adjacents et plusieurs empilages de pinces étagées sont ainsi formés pour pincer et décolleter une ligne de bouteilles supportées chacune par un support verticalement mobile.

On précisera encore que la lame passant entre deux pinces est montée de façon démontable sur un support solidaire d'un axe de rotation concentrique aux axes portant les bras de chaque pince.

Mais d'autres caractéristiques et avantages de l'invention apparaîtront mieux dans la description détaillée qui suit et se réfère aux dessins annexés, donnés uniquement à titre d'exemple, et dans lesquels.

La figure 1 illustre schématiquement les différentes étapes du procédé selon cette invention permettant le décolletage du col d'une bouteille fermée.

La figure 2 est une vue extérieure et en élévation du dispositif à trois pinces étagées et lame de découpe, conforme à cette invention.

La figure 3 est une vue en coupe suivant la ligne III-III de la figure 2.

La figure 4 est une vue en coupe suivant la ligne IV-IV de la figure 2 et illustre la découpe du col d'une bouteille.

Les figures 5, 6, 7 et 8 sont des vues en coupe transversale suivant respectivement les lignes V, VI, VII et VIII de la figure 3.

Les figures 9, 10, 11 et 12 sont des vues en coupe transversale suivant respectivement les lignes IX, X, XI et XII, de la figure 3.

La figure 13 illustre en coupe transversale les trois pinces étagées et la lame de découpe coopérant avec une ligne de bouteilles, la coupe transversale étant effectuée à plusieurs niveaux comme montré sur la figure 3. Plus précisément, de la gauche vers la droite de la figure 13, sont illustrées successivement des coupes suivant les lignes XII (première pince), XI (deuxième pince), IX (troisième pince ou pince supérieure) et X (lame de découpe).

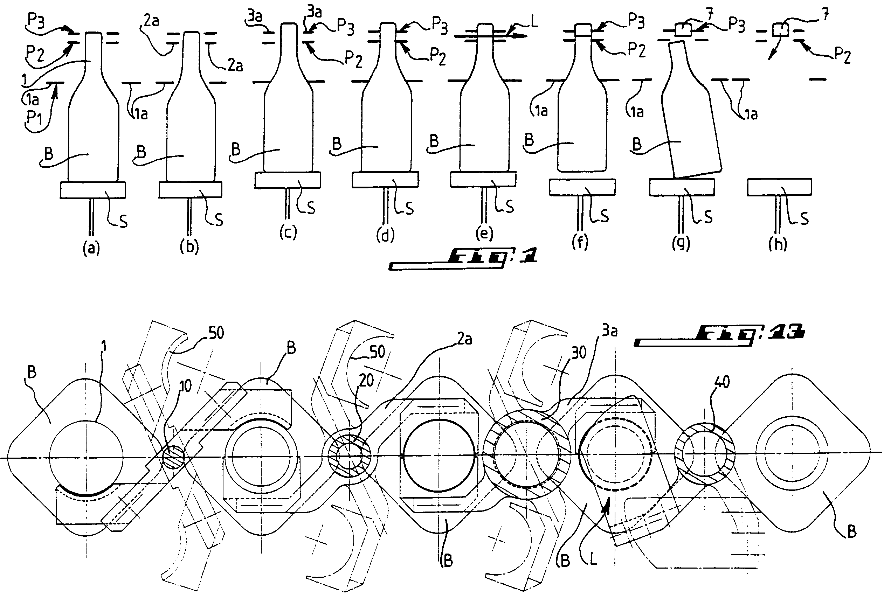

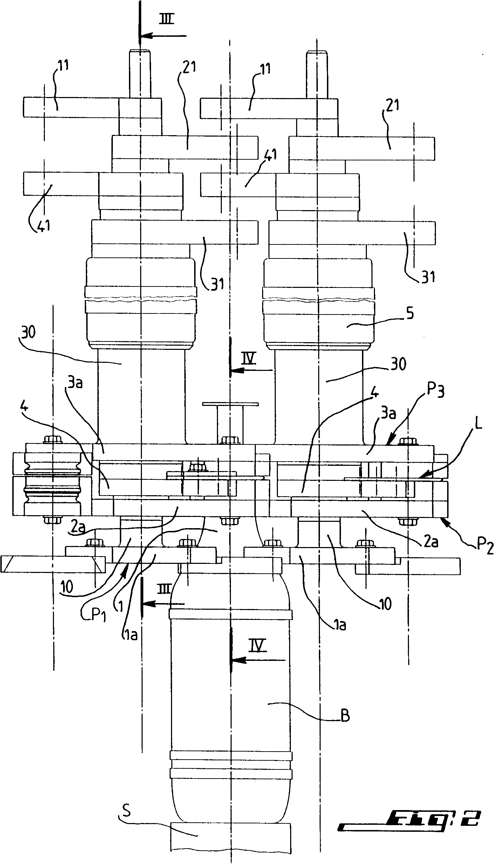

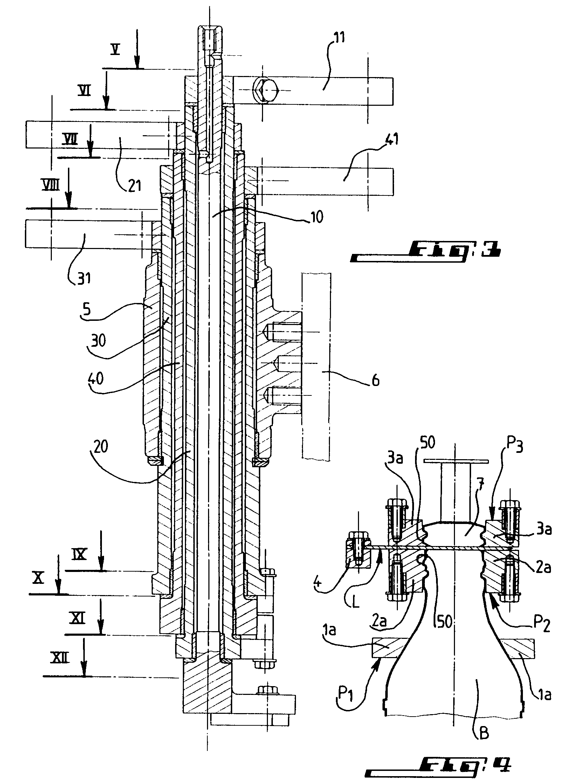

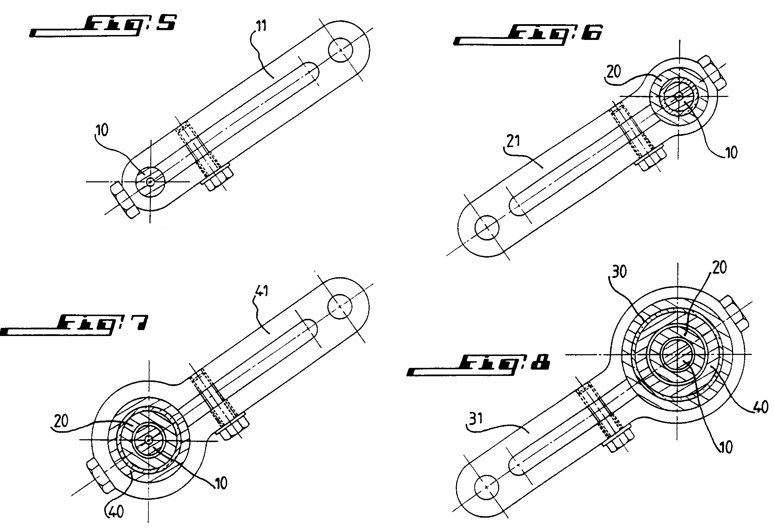

Suivant l'exemple de réalisation représenté sur les dessins, un dispositif selon cette invention de découpe ou de décolletage, du goulot ou col 1 de bouteilles fermées en matière plastique B, comprend essentiellement un support S verticalement mobile pour lesdites bouteilles, trois pinces étagées repérées d'une manière générale en $P_1$, $P_2$, $P_3$ et une lame de découpe L agencée entre les pinces $P_2$ et $P_3$ (voir plus particulièrement figures 1, 2 et 4).

Chaque pince $P_1$, $P_2$, $P_3$ est essentiellement constituée de deux bras coopérant par une extrémité avec la bouteille B, chaque bras étant solidaire, par son milieu d'un axe de rotation.

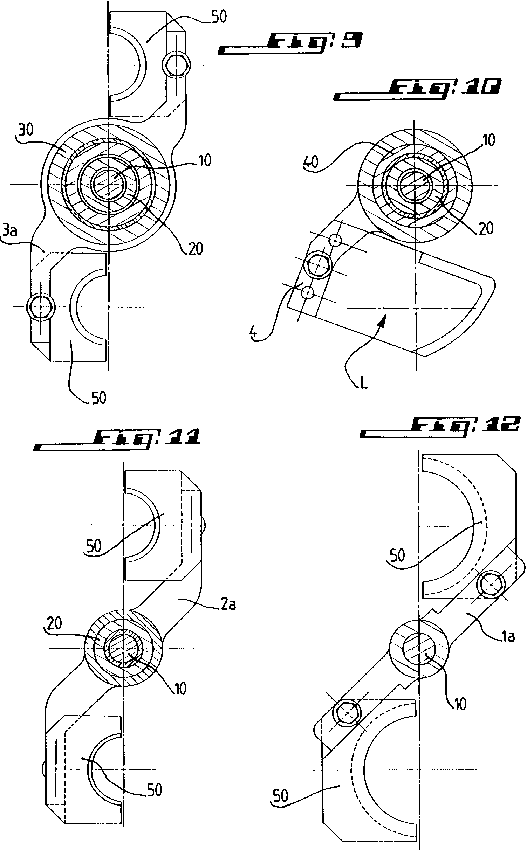

Plus précisément, et comme on le voit notamment sur les figures 2, 4, 12 et 13, la pince $P_1$, qui est la pince inférieure, se compose de deux bras 1a solidaires par leur partie milieu d'un axe d'entraînement en rotation 10. Cet axe de rotation, comme on le voit sur les figures 2, 3 et 5 est également solidaire d'une biellette ou analogue 11 permettant l'entraînement en rotation de chaque bras 1a par tout moyen approprié et non représenté.

La deuxième pince $P_2$, comme on le voit sur les figures 2, 3, 4, 11 et 13 est elle aussi constituée de deux bras 2a solidaires chacun, par leur partie milieu d'un axe de rotation 20 extérieurement concentrique à l'axe 10. Cet axe 20, comme on le voit sur les figures 2, 3 et 6 est également solidaire d'une biellette ou analogue 21 sollicitée par tout moyen approprié et non représenté pour entraîner en rotation ledit axe et par conséquent les deux bras 2a.

Comme cela apparaît sur les figures 2, 3, 4 et 9, la pince $P_3$, qui est la pince supérieure, est elle aussi constituée de deux bras 3a qui sont chacun solidaires, par leur partie milieu, d'un axe de rotation 30 extérieurement concentrique à l'axe 20. En se reportant à la figure 8 notamment, on voit que chaque bras 3a est solidaire d'une biellette ou analogue 31 permettant, par tout moyen approprié et non représenté, l'entraînement en rotation de l'axe 30 et par conséquent des bras 3a.

A ce stade, on observera que les bras 1a, 2a et 3a comportent chacun des extrémités 50 (figures 9, 11 et 12) qui sont conformées de façon à pouvoir coopérer étroitement avec le goulot ou col 1 d'une bouteille B, comme on l'expliquera ultérieurement à propos du fonctionnement. Cependant, on observera déjà que les deux extrémités d'un bras coopèrent avec une extrémité d'un bras adjacent, après rotation desdits bras, pour enserrer ou pincer le col 1 de la bouteille B.

En se reportant à nouveau aux figures 2, 3 et 4, ainsi qu'à la figure 10, on voit que la lame L est montée de façon amovible ou démontable sur un support 4 solidaire d'un axe 40 extérieurement concentrique à l'axe 20 et intérieurement concentrique à l'axe 30. Comme on le voit sur la figure 7 notamment, l'axe 40 est solidaire en rotation d'une biellette ou analogue 41 qui peut être sollicitée par tout moyen approprié et non représenté pour entraîner en rotation l'axe 40 et par conséquent la lame L solidaire de cet axe par l'intermédiaire du support 4.

Ainsi, l'ensemble étagé constitué par un bras 1a, un bras 2a, une lame L et un bras 3a constitue trois demi-pinces avec lame interposée entre le bras 2a et le bras 3a, tous ces éléments étant solidaires d'axes de rotation concentriques 10, 20, 30, 40 pouvant être entraînés en rotation par l'intermédiaire de biellettes 11, 21, 31, 41 elles mêmes actionnables par tout moyen approprié tel que des cames (non représentées) par exemple.

On a montré en 5 sur les figures 2 et 3 un fourreau supportant les axes précités et solidaire d'un bâti 6.

Comme on le comprend en se reportant à la figure 13, le dispositif selon cette invention peut comporter plusieurs ensembles alignés de bras étagés 1a, 2a, 3a avec lame L, de façon à pouvoir réaliser le décolletage d'une ligne de bouteilles B, étant entendu que les bras d'un ensemble travaillent avec les bras correspondants de l'ensemble adjacent pour pincer les bouteilles B.

Mais, pour une meilleure compréhension de l'invention, on décrira ci-après en détail comment s'effectue de décolletage du col 1 d'une bouteille B, en se reportant plus particulièrement à la figure 1.

On partira de la figure 1a montrant une bouteille B à décolleter et reposant sur le support verticalement mobile S, alors que les pinces $P_1$, $P_2$, $P_3$ sont ouvertes (bras 1a, 2a, 3a ouverts).

Comme on le voit sur la figure 1b, on commence par fermer la première pince ou pince inférieure $P_1$ située dans la zone inférieure du col 1 de la bouteille B.

Ensuite, comme on le voit sur la figure 1c, le support S de la bouteille est soulevé, de sorte que la bouteille vient en butée par sa partie supérieure (c'est-à-dire par sa partie sensiblement conique raccordant le col 1 au corps de la bouteille) sur la première pince $P_1$ constituant ainsi une butée de référence.

Puis, comme on le voit sur la figure 1d, on ferme les pinces P₂ et P₃ contre le col 1 de la bouteille B, étant entendu que ces deux pinces peuvent être fermées simultanément ou l'une après l'autre.

La lame L, comme on le voit sur la figure 1e, est alors actionnée en rotation et sectionne le col 1 de la bouteille entre les pinces P₂ et P₃, étant entendu que le support S maintient toujours la bouteille B appliquée contre la première pince P₁.

A la suite de cela, le support S de la bouteille est abaissé, comme on le voit sur la figure 1f, ladite bouteille étant maintenue suspendue par la pince P₂.

On ouvre alors simultanément ou non les pinces P₁ et P₂, comme on le voit sur la figure 1g, de sorte que la bouteille B peut être évacuée vers un autre poste.

Enfin, l'évacuation de l'extrémité libre fermée et découpée 7 du col 1 de la bouteille est évacuée après ouverture de la pince P₃.

On a donc réalisé suivant l'invention un procédé et un dispositif de décolletage des bouteilles fermées qui sont techniquement très simples, qui présentent une excellente fiabilité de fonctionnement et qui permettent un décolletage rapide d'une ligne de bouteilles sans incidents.

Bien entendu, l'invention n'est nullement limitée au mode de réalisation décrit et illustré qui n'a été donné qu'à titre d'exemple.

C'est ainsi que les moyens d'actionnement des pinces et des lames peuvent être quelconques, et que les extrémités conformées des bras de pince peuvent être aussi quelconques et être intégrales à ou rapportées sur ces bras en y étant fixées par tout moyen approprié, comme montré sur les figures. De même, on peut prévoir des bagues ou coussinets quelconques entre les divers axes concentriques solidaires des bras et des lames.

C'est dire que l'invention comprend tous les équivalents techniques des moyens décrits, ainsi que leurs combinaisons, si celles-ci sont effectuées suivant son esprit.

**Revendications**

1. Procédé de décolletage de la partie supérieure d'un récipient fermé constituant par un exemple un goulot ou col (1) de bouteille (B) et du type consistant à maintenir la bouteille afin de permettre la découpe du col (1) à l'aide d'une lame ou analogue (L), caractérisé en ce que la bouteille reposant initialement sur un support verticalement mobile (S),
   – on ferme une première pince (P₁) située au niveau de la partie supérieure de la bouteille (B) en dessous du col,
   – on soulève le support (S) de la bouteille (B) pour qu'elle vienne en butée par sa partie supérieure sur ladite première pince (P₁) constituant ainsi une butée de référence,
   – on ferme une deuxième pince (P₂) située au-dessus de la première pièce (P₁), contre le col (1) de la bouteille (B),
   – on ferme simultanément ou non à la fermeture de la deuxième pince (P₂), une troisième pince (P₃) située au-dessus de cette deuxième pince, contre le col (1) de la bouteille,
   – on actionne la lame (L) pour qu'elle passe entre la deuxième et la troisième pinces (P₂, P₃) afin de sectionner le col (1) de la bouteille, et
   – on ouvre les trois pièces (P₁, P₂, P₃), pour séparer la bouteille (B) de l'extrémité libre et fermée (7) du col (1) découpé par la lame (L).

2. Procédé selon la revendication 1, caractérisé en ce qu'avant d'ouvrir les trois pinces, on abaisse le support (S) de la bouteille, ce après quoi, on ouvre simultanément ou non la première (P₁) et la deuxième (P₂) pinces pour permettre l'évacuation de la bouteille (B), puis une fois la bouteille évacuée, on ouvre la troisième pince (P₃) pour permettre l'évacuation de l'extrémité libre (7) fermée et découpée du col (1) de la bouteille.

3. Dispositif pour la mise en oeuvre du procédé selon la revendication 1 ou 2, et du type comprenant des moyens de maintien par pinçage du goulot ou col de la bouteille ainsi qu'un moyen de découpe de ce col, caractérisé en ce qu'il comprend, au-dessus d'un support (S) de bouteille (B) verticalement mobile, deux pinces étagées (P₂, P₃) susceptibles d'épouser étroitement le col (1) de la bouteille (B) et une lame (L) montée rotative entre ces deux pinces, les deux pinces et la lame étant respectivement solidaires d'axes de rotation concentriques (20,30,40) actionnables chacun par une biellette ou analogue (21,31,41).

4. Dispositif selon la revendication 3, caractérisé en ce qu'en dessous des deux pinces précitées (P₂, P₃) est prévue une autre pince (P₁) qui forme butée de référence pour la bouteille (B) soulevée par le support précité (S), et qui est solidaire d'un axe de rotation (10) lui aussi actionnable par une biellette ou analogue (11) et concentrique aux axes de rotation concentriques précités (20, 30, 40).

5. Dispositif selon la revendication 3 ou 4, caractérisé en ce que chaque pince précitée (P₁, P₂, P₃) se compose de deux bras (1a, 2a, 3a) coopérant par une extrémité (5a) avec la bouteille (B), chaque bras étant solidaire d'un axe de rotation concentrique aux axes solidaires des autres paires de bras constituant les autres pinces.

6. Dispositif selon la revendication 5, caractérisé en ce que les deux extrémités (50) de chaque bras (1a, 2a, 3a) des pinces étagées sont conformées pour coopérer avec les extrémités de bras adjacents et plusieurs empilages de pinces étagées sont ainsi formés pour pincer et décolleter une ligne de bouteilles supportées chacune par un support verticalement mobile (S).

7. Dispositif selon l'une des revendications 3 à 6, caractérisé en ce que la lame précitée est montée de façon démontable sur un support (4) solidaire d'un axe de rotation (40) concentrique aux axes (10, 20, 30) portant les bras (1a, 2a, 3a) de chaque pince ($P_1$, $P_2$, $P_3$).

Fig. 1

Fig. 13

EP 0 502 760 A1

Fig. 2

Fig. 3

Fig. 4

Fig. 6

Fig. 5

Fig. 8

Fig. 7

Fig. 9

Fig. 10

Fig. 11

Fig. 12

Office européen
des brevets

# RAPPORT DE RECHERCHE EUROPEENNE

Numero de la demande

EP    92 40 0486

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| Y | FR-A-1 376 498 (A. DI SETTEMBRINI) <br> * le document en entier * | 1 | B29C49/74 <br> B26D7/01 <br> B26D7/18 |
| A | | 3 | |
| | --- | | |
| Y | WO-A-8 804 589 (BOXHOLM PRODUCTION AB) <br> * figures * | 1 | |
| | --- | | |
| A | FR-A-1 499 446 (A. DI SETTEMBRINI) <br> * figures * | | |
| | --- | | |
| A | FR-A-2 132 104 (SHIKOKU KAKOOKI CO., LTD) <br> * figures * | | |
| | --- | | |
| A | FR-A-2 261 119 (BAXTER LABORATORIES INC.) <br> * figures * | | |
| | --- | | |
| A | FR-A-2 213 148 (SOLVAY & CIE) | | |
| | ----- | | |

### DOMAINES TECHNIQUES RECHERCHES (Int. Cl.5 )

B29C
B26D
B23D

Le présent rapport a été établi pour toutes les revendications

| Lieu de la recherche | Date d'achèvement de la recherche | Examinateur |
|---|---|---|
| LA HAYE | 05 JUIN 1992 | LASSON Cedric |

CATEGORIE DES DOCUMENTS CITES

X : particulièrement pertinent à lui seul
Y : particullèrement pertinent en combinaison avec un
    autre document de la même catégorie
A : arrière-plan technologique
O : divulgation non–écrite
P : document intercalaire

T : théorie ou principe à la base de l'invention
E : document de brevet antérieur, mais publié à la
    date de dépôt ou après cette date
D : cité dans la demande
L : cité pour d'autres raisons
.....................................................................
& : membre de la même famille, document correspondant

EPO FORM 1503 03.82 (P0402)